# EUROPÄISCHE PATENTSCHRIFT

(11) **EP 2 594 857 B1**
(45) Veröffentlichungstag und Bekanntmachung des Hinweises auf die Patenterteilung: **16.05.2018**
(21) Anmeldenummer: 11290524.5
(22) Anmeldetag: 15.11.2011
(51) Int. Cl.: F24F 3/14

(54) **Luftentfeuchter**
Air dehumidifier
Déshumidificateur d'air

(43) Veröffentlichungstag der Anmeldung: 22.05.2013
(73) Patentinhaber: Henkel AG & Co. KGaA, 40589 Düsseldorf (DE)
(72) Erfinder: Ruthe-Steinsiek, Kai, 40219 Düsseldorf (DE); Orlik, Sylvain, 40472 Düsseldorf (DE); Godard, Fanny, 76000 Rouen (FR); Noe, Mathieu, 27700 La Roquette (FR); Farce, Jean-Michel, 75006 Paris (FR)

(56) Entgegenhaltungen:
- WO-A1-2005/005024
- DE-U1- 9 000 887
- GB-A- 2 067 428
- US-A- 2 036 909
- US-A- 2 556 910
- US-A1- 2005 056 151

## Beschreibung

Die Erfindung betrifft eine Tablette für einen Luftentfeuchter oder allgemein eine Vorrichtung zur Absorption von Feuchtigkeit aus Raumluft mittels eines hygroskopischen Luftentfeuchtungsmittels.

Dergleiche Vorrichtungen sind im Stand der Technik weit verbreitet. Mit Vorrichtungen der bekannten Art wird die Feuchtigkeit aus der Raumluft aufgenommen und in Form von Wasser oder einer wässrigen Lösung in einem Auffangbehälter gesammelt. Hierzu kommt ein hygroskopisches Luftentfeuchtungsmittel zum Einsatz, welches beispielsweise in Pulver- oder Granulatform vorliegt. Als Luftentfeuchtungsmittel haben sich hier insbesondere Calciumchlorid, Magnesiumchlorid, Silicagel oder auch Aluminiumoxidgel als einsetzbar herausgestellt. Beispiele für derartige Vorrichtungen werden insbesondere in der DE 88 16 583 U1, der EP 0 793 060 A1 oder der US 5,125,561 A offenbart. Eine weitere Vorrichtung zur Aufnahme eines Luftentfeuchtungsmittels offenbart die US 2,036,909 A.

Einfacher handhabbar, insbesondere bei dem Befüllen oder Nachfüllen besagter Vorrichtung mit einem Luftentfeuchtungsmittel hat sich jedoch der Einsatz eines Luftentfeuchtungsmittels in Tablettenform erwiesen. Eine derartige Tablette wird dabei insbesondere aus in Pulver- oder Granulatform vorliegenden hygroskopischen Mitteln, wie beispielsweise Calciumchlorid oder Magnesiumchlorid oder einer Mischung, durch ein Pressverfahren hergestellt. Ein Beispiel für eine derartige Vorrichtung zeigt die EP 1 779 043 B1. Die Oberfläche der Tablette steht dabei für die Sorption der Feuchtigkeit zur Verfügung. Oft werden die Tabletten auf eine Unterlage aufgelegt oder es ist - wie in der genannten EP 1 779 04 B1 offenbart - ein entsprechendes Haltegestell vorgesehen, welches Bereiche der Tablette abdeckt und so die Sorption beeinträchtigt.

Aufgabe der vorliegenden Erfindung ist die Bereitstellung einer verbesserten Tablette der eingangs genannten Art.

Diese Aufgabe wird durch die Merkmale des Anspruchs 1 gelöst.

Vorteilhafte Weiterbildungen der Erfindung sind in den Unteransprüchen angegeben.

Eine Tablette dieser Art eignet sich zum Einsatz in einer Vorrichtung zur Absorption von Feuchtigkeit aus Raumluft mittels besagter Tablette, wobei die Vorrichtung eine Haltevorrichtung für die Tablette aufweist, sowie einen unterhalb der Haltevorrichtung angeordneten Auffangbehälter zur Aufnahme einer Lösung, wobei die Haltevorrichtung ein Hängemittel zum Aufhängen der Tablette oberhalb des Auffangbehälters umfasst, wobei das Hängemittel einen Kontakt nahezu der gesamten Sorptionsoberfläche mit der Raumluft ermöglicht, um die freie und zur Sorption von Feuchtigkeit zur Verfügung stehende Sorptionsoberfläche der Tablette zu vergrößern.

Ein derartiges Hängemittel kann auf unterschiedliche Art und Weise ausgestaltet sein. Es kann ein Dorn oder ähnlich gestaltetes Hängemittel zum Einsatz kommen, welches sich durch eine Durchgangsöffnung oder Durchgangsloch oder durchgehende Bohrung der Tablette erstreckt.

Alle Lösungen haben gemein, dass nahezu die gesamte Sorptionsoberfläche als freie Sorptionsoberfläche zur Verfügung steht, also als Oberfläche des Tablettenkörpers, die für die Sorption der Feuchtigkeit aus der Raumluft zur Verfügung steht. Eine Abdeckung eines Großteils der Oberfläche des Tablettenkörpers kann durch den Einsatz eines derartigen Hängemittels vermieden werden, so dass eine Vergrößerung der freien und zur Sorption von Feuchtigkeit zur Verfügung stehenden Sorptionsoberfläche der Tablette vergrößert wird. Diese vergrößerte freie Sorptionsoberfläche resultiert in einer höheren Sorptionsrate der beschriebenen Vorrichtung im Vergleich zu herkömmlichen Vorrichtungen der eingangs gezeigten Art.

Vorzugsweise ist der Auffangbehälter im Wesentlichen als geschlossene Sammelschale gestaltet, um ein Auslaufen der von der sich durch die aufgenommene Feuchtigkeit auflösende Tablette entstehenden Lösung zu verhindern und weist an seiner Oberseite eine angeformte oder als separates Teil gestaltete Deckfläche auf. Dabei ist die Verbindung zwischen Sammelschale und Deckfläche vorzugsweise dicht gestaltet. Zudem weist die Deckfläche vorzugsweise eine Auslaufsperre auf, die es ermöglicht, dass eine Lösung, die von der Deckfläche gesammelt wurde, in die Sammelschale ablaufen kann, und die das Auslaufen der gesammelten Lösung aus einer umgekippten Vorrichtung verhindert. Die Gestaltung insbesondere der Auslaufsperre kann dabei gemäß der Offenbarung der EP1779043B1 erfolgen, die insoweit die vorliegende Offenbarung ergänzt.

Die zum Einsatz kommende Tablette besteht dabei insbesondere aus hygroskopischen Mitteln in Pulver- oder Granulatform, wie beispielsweise Calciumchlorid oder Magnesiumchlorid oder einer Mischung, die durch ein Pressverfahren in besagte Tablettenform gebracht worden sind. Insbesondere sind die Merkmale einer Tablette sowie ein Herstellungsverfahren einer Tablette denkbar wie in der EP 1 426 105 A1 beschrieben, welche insoweit die vorliegende Offenbarung ergänzt. Die Grundform der Tablette ist vorzugsweise zylindrisch. Denkbar sind jedoch auch eckige Grundform, insbesondere Tabletten mit dreieckigem, viereckigem oder vieleckigem Querschnitt.

Besonders vorteilhaft hat sich ferner eine Gestaltung des Hängemittels der Haltevorrichtung derart erwiesen, dass es dornförmig gestaltet ist. Bei dem Einsatz einer im Wesentlichen zylindrischen Tablette kann selbige eine Aussparung in Form eines Durchgangsloches oder einer Durchgangsöffnung aufweisen, in die das dornförmige Hängemittel derart eingreift, dass die Tablette hinsichtlich des Auffangbehälters und des Substrates auf dem der Auffangbehälter angeordnet ist, an diesem dornförmigen Hängemittel hängt. So kann im Wesentlichen die gesamte äußere Oberfläche der Tablette - abgesehen von dem Bereich der Aussparung, die mit dem dornförmigen Hängemittel in Kontakt steht - der Tablette als freie Sorptionsoberfläche zur Sorption der Feuchtigkeit aus der Raumluft genutzt werden.

Die genaue Ausgestaltung des dornförmigen Hängemittels kann dabei von der Gestaltung der Tablette und den übrigen Bauelementen der Vorrichtung sowie der Lage und Anordnung des Hängemittels abhängen. Beispielsweise kann das Hängemittel dornförmig, also vorstehend und im Wesentlichen zylindrisch oder hohlzylindrisch gestaltet sein und sich im Wesentlichen parallel zum Boden des Auffangbehälters und/oder des Substrates erstrecken. Auch ist ein schräger Verlauf denkbar, insbesondere um eine sichere Fixierung der Tablette zu gewährleisten. Weiter kann das Hängemittel hakenförmig ausgebildet sein oder eine andere Form aufweisen, welche ein Aufhängen der Tablette gewährleistet.

In einer vorteilhaften Weiterentwicklung kann der Dorn zumindest eine Öffnung aufweist, um eine Belüftung der Tablette im Bereich der Aussparung zu ermöglich und um die freie und zur Sorption von Feuchtigkeit zur Verfügung stehende Sorptionsoberfläche der Tablette weiter zu vergrößern. Auch kann die zumindest eine Öffnung derart gestaltet sein, dass sie der durch die Sorption entstehenden Lösung eine bevorzugte Abtropf- und/oder Fließrichtung ermöglicht.

Weiterhin hat es sich als vorteilhaft herausgestellt, wenn das dornförmige Hängemittel vorstehende Abstandselemente, insbesondere längliche Rippen, die sich in Erstreckungsrichtung des Hängemittels erstrecken können, zur Bereitstellung einer Auflagemöglichkeit für die Tablette im Bereich ihrer Aussparung aufweist, um die Kontaktfläche von Tablette und Hängemittel zu minimieren. In diesem Fall hängt die Tablette demnach lediglich durch eine Auflage von kleinen Oberflächenbereichen innerhalb der Aussparung auf genannten Abstandselementen an dem Hängemittel, so dass die freie Sorptionsoberfläche weiter vergrößert werden kann. Denkbar ist insbesondere auch der Einsatz von Noppen, Vorsprüngen oder Stiften als Abstandselemente.

Ein weiterer Vorteil ist der Einsatz einer Abdeckung oberhalb des Auffangbehälters, welche einen Innenraum umschließt in dem die Haltevorrichtung oder das Hängemittel vorgesehen ist, wobei die Abdeckung mit zumindest einer Belüftungsöffnung ausgestattet ist, um eine Belüftung der Tablette mit Raumluft zur Sorption der Feuchtigkeit aus der Raumluft zu ermöglichen. Die Abdeckung kann ferner dem Schutz der Tablette dienen und ist daher vorzugsweise im Wesentlichen geschlossen und deckt die Tablette rundum ab. So kann ausgeschlossen werden, dass die Tablette verschmutzt. Die Belüftungsöffnung, vorzugsweise eine Vielzahl an Belüftungsöffnungen sind vorzugsweise zumindest auf dem Niveau der innerhalb des Innenraums angeordneten Tablette, so dass eine gute Belüftung ermöglicht werden kann. Die Belüftungsöffnung kann dabei beliebig gestaltet sein, beispielsweise als Loch, Spalte oder Schlitze. In einer bevorzugten Ausführungsöffnung kommt eine Vielzahl an Belüftungsöffnungen in Form einer Vielzahl von Schlitzen zum Einsatz, welche sich über eine Seite der Abdeckung propellerartig erstrecken. Vorzugsweise liegt die Gesamtöffnungsfläche aller Belüftungsöffnungen im Bereich von 40cm² bis 80cm², besonders bevorzugt im Bereich von 45cm² bis 65cm².

Besonders vorteilhaft ist zudem eine Gestaltung der Abdeckung derart, dass zumindest jeweils eine Belüftungsöffnung an einer ersten Seite und an einer der ersten Seite gegenüberliegenden zweiten Seite der Abdeckung vorgesehen ist, wobei zwischen den Belüftungsöffnungen der gegenüberliegenden Seiten innerhalb der Abdeckung die Haltevorrichtung oder das Hängemittel für die Tablette vorgesehen ist, um eine Durchzugsmöglichkeit der Raumluft durch den Innenraum der Abdeckung und insbesondere an der Tablette vorbei bereitzustellen. Bevorzugt kommt hier an zumindest einer, besonders bevorzugt an beiden gegenüberliegenden Seiten eine Vielzahl ab Belüftungsöffnungen zum Einsatz. Vorzugsweise liegt die Öffnungsfläche der Summe der Belüftungsöffnungen einer Seite im Bereich von 20cm² bis 40cm². Vorzugsweise entspricht die Oberfläche zumindest einer Belüftungsöffnung der ersten Seite im Wesentlichen der Oberfläche der zumindest einen Belüftungsöffnung der zweiten Seite der Abdeckung. Vorzugsweise liegt die Gesamtöffnungsfläche der Summe der Belüftungsöffnungen beider Seiten im Bereich von 40cm² bis 80cm², besonders bevorzugt im Bereich von 45cm² bis 65cm².

Als besonders vorteilhaft hat sich eine Gestaltung derart herausgestellt, dass die zumindest eine Belüftungsöffnung der zweiten Seite eine Projektion der zumindest einen Belüftungsöffnungen der gegenüberliegenden ersten Seite ist. Auf diese Weise kann eine besonders gute Belüftung der Im Innenraum angeordneten Tablette ermöglicht werden, um die Sorption zu verbessern. Vorzugsweise kommt auch hier an beiden Seiten jeweils eine Vielzahl an Belüftungsöffnungen zum Einsatz. Bevorzugt ist zumindest ein Teil der Oberfläche zumindest einer Belüftungsöffnung auf dem Niveau der im Innenraum angeordneten Tablette.

Ein weiterer Vorteil ist die Unterteilung der Abdeckung in zumindest zwei Bereiche, wobei einer ein Abdeckungsbereich und ein weiterer ein Öffnungsbereich ist, wobei letzterer nach Öffnung desselben einen Eingriff in den Innenraum zur Befüllung der Vorrichtung mit einer Tablette ermöglicht. Vorzugsweise ist die Abdeckung als Baugruppe aus zumindest den besagten Bauteilen zusammengesetzt und sie sind auf beliebige Weise lösbar oder beweglich zueinander verbunden. In einem bevorzugten Ausführungsbeispiel ist der Abdeckungsbereich mit dem Auffangbehälter fest verbunden oder verbindbar und umschließt vorzugsweise einen Großteil des Innenraums. Der Öffnungsbereich ist zur Befüllung der Vorrichtung mit einer Tablette zu öffnen, beispielsweise durch Gestaltung eines Deckels, einer Klappe, einer Schiebetür, einer schubladenartigen Lösung oder einer anderen geeigneten Bauform, welche jeweils eine Öffnung und so dann einen Eingriff in den Innenraum für den Anwender ermöglicht.

Besonders vorteilhaft hat sich der Einsatz eines Öffnungsbereichs erweisen, der als ein hinsichtlich des Abdeckungsbereichs verschwenkbarer Deckel gestaltet ist. Diese Bauform ist technisch besonders einfach zu realisieren und für den Anwender einfach zu handhaben. Der Abdeckungsbereich ist dabei vorzugsweise fest mit dem Auffangbehälter verbunden oder verbindbar, beispielsweise über geeignete Klemmmittel oder Schnappverbindungsmittel. Vorzugsweise ist zudem zumindest eine Gelenkverbindung, insbesondere ein Scharnier zwischen dem Abdeckungsbereich und dem Deckel vorgesehen. Zudem hat es sich als vorteilhaft herausgestellt, einen Deckel zu verwenden, welcher das Hängemittel umfasst, derart, dass eine Öffnung des Deckels auch zu einer Verschwenkung des Hängemittels hinsichtlich des Abdeckungsbereichs führt, um eine Befüllung der Vorrichtung mit einer Tablette zu erleichtern. Besonders bevorzugt kommt eine derartige Ausgestaltung bei der Verwendung eines dornförmigen Hängemittels zum Einsatz, wobei sich das dornförmige Hängemittel im geschlossenen Zustand des Deckels im Wesentlichen parallel zum Auffangbehälterboden und/oder zum Substrat erstreckt. Bei der Öffnung wird das Hängemittel derart hinsichtlich des Abdeckungsbereichs verschwenkt, dass sich das dornförmige Hängemittel im Wesentlichen rechtwinklig zum Auffangbehälterboden und/oder zum Substrat erstreckt. Auf diese Weise kann eine besonders einfache Befüllmöglichkeit für den Anwender insbesondere unter Nutzungsmöglichkeit der Schwerkraft bereitgestellt werden. Bei dem Einsatz eines das dornförmigen Hängemittel umfassenden Deckels hat es sich ferner als vorteilhaft herausgestellt, selbiges im Bereich oder der Nähe der Schwenkachse des Deckels anzuordnen, um die Standsicherheit der Vorrichtung insbesondere bei eingelegter Tablette zu erhöhen.

Ein weiterer Vorteil ist die Ausstattung der Abdeckung mit zumindest einem von einer Innenwand der Abdeckung in Richtung Innenraum ragenden Abstandselement, insbesondere in Form einer Rippe oder eines Vorsprungs, um eine definierte Beabstandung einer Tablette von der Innenwand zu ermöglichen. Durch ein derartiges Abstandselement kann beispielsweise verhindert werden, dass die Innenwand der Abdeckung die Sorptionsoberfläche der Tablette ver- oder abdeckt, was zu einer Beeinträchtigung der Sorptionsrate führen könnte.

Ein weiterer Vorteil ist die Gestaltung des zumindest einen Abstandselementes derart, dass es eine eindeutige Positionierung und insbesondere drehsichere Fixierung einer Tablette hinsichtlich des Hängemittels ermöglicht. Hierbei können beispielsweise mehrere Abstandselemente, vorzugsweise in Form von Rippen zum Einsatz kommen, die unterschiedlich weit in den Innenraum hineinragen. Auf diese Weise kann eine Art Negativform der Tablette durch die Abstandselemente bereitgestellt werden, die ein Abrutschen der Tablette von dem Hängemittel verhindern können. Auch können ein oder mehrere Abstandsmittel derart gestaltet sein, dass sie beispielsweise in Aussparungen, wie etwa Nuten oder Öffnungen oder Bohrungen eingreifen oder selbst einen Eingriff von vorstehenden Bereichen einer Tablette ermöglichen, so dass insbesondere eine drehsichere Fixierung der Tablette ermöglicht werden kann.

Ferner hat es sich als vorteilhaft herausgestellt, dass mehrere Abstandselemente zum Einsatz kommen, die jeweils unterschiedlich tief oder weit in den Innenraum hineinragen und/oder zumindest ein Abstandselement, welches unterschiedliche tief in den Innenraum ragende Bereiche aufweist, insbesondere um eine Aufnahmemöglichkeit von Tabletten mit unterschiedlichen Stärken und/oder unterschiedlich gestalteten Nuten für die hineinragenden Bereiche der Abstandselemente zu ermöglichen.

Ein weiterer Vorteil ist die Ausrüstung der Haltevorrichtung mit einem an einer ersten Seite der Vorrichtung vorgesehenen Befestigungsabschnitt für das Hängemittel, von dem sich das Hängemittel von der ersten Seite der Vorrichtung in Richtung der gegenüberliegenden zweiten Seite erstreckt, wobei die Haltevorrichtung an dieser zweiten Seite eine Aufnahme in Form eines Gegenlagers für das Hängemittel umfasst, wobei das Hängemittel von der Aufnahme lösbar gestaltet ist, um eine einfache Befüllung der Vorrichtung mit einer Tablette aufweisend eine als Durchgangsöffnung, Durchgangsloch oder durchgehenden Bohrung gestaltete Aussparung zu ermöglichen und um eine sichere Fixierung des Hängemittels und somit der Tablette zu gewährleisten. Insbesondere kann eine derartige Bauform in Verbindung mit oben beschriebener zumindest zweiteiliger Abdeckung sinnvoll sein, bei der der Befestigungsabschnitt für das Hängemittel an einem klapp- oder schwenkbaren Deckel vorgesehen werden kann.

Für die erfindungsgemäße Tablette sind insbesondere die Merkmale einer Tablette sowie ein Herstellungsverfahren einer Tablette denkbar wie in der EP 1 426 105 A1 beschrieben, welche insoweit die vorliegende Offenbarung ergänzt.

Besonders vorteilhaft ist dabei der Einsatz einer Tablette, deren Sorptionsoberfläche, also die für die Absorption von Feuchtigkeit aus Raumluft zur Verfügung stehende Oberfläche, inklusive der Oberfläche der Tablette im Bereich der Aussparung, eine Größe im Bereich von 290² bis 340cm² aufweist.

In einer vorteilhaften Weiterbildung ist die Oberseite und/oder die Unterseite wellenartig gestaltet, um zur Erhöhung der Absorptionsrate von Feuchtigkeit aus Raumluft die zur Verfügung stehende Sorptionsoberfläche zu vergrößern.

Denkbar ist zudem der Einsatz eines Systems bestehend aus einer beschriebenen Vorrichtung und einer beschriebenen Tablette.

Vorzugsweise weist die Vorrichtung dabei eine Abdeckung mit Belüftungsöffnungen auf, wobei die Gesamtöffnungsfläche aller Belüftungsöffnungen vorzugsweise im Bereich von 40cm² bis 80cm² liegt, besonders bevorzugt im Bereich von 45cm² bis 65cm². Vorzugsweise sind die Belüftungsöffnungen zumindest an zwei gegenüberliegenden Seiten der Abdeckung angeordnet, wobei die Tablette bevorzugt innerhalb der Abdeckung zwischen besagten die Belüftungsöffnungen aufweisenden Bereichen angeordnet ist, um eine Durchzugsmöglichkeit zu ermöglichen.

Besonders bevorzugt kommen besagte Belüftungsöffnungen und eine Tablette zum Einsatz, wobei das Oberflächenverhältnis von der Tablettenoberfläche zur Öffnungsoberfläche aller Belüftungsöffnungen im Bereich von 7,25 - 4,25 liegt.

Vorteilhaft weist die Vorrichtung zusätzlich im Bereich des Auffangbehälters eine Aufnahme für eine weitere Tablette auf, insbesondere um dem Anwender ein System bereitzustellen, welches eine weitere Tablette zur Nachbefüllung der Einheit aufweist, wobei auf Verpackungsmaterial verzichtet werden kann, da als Umverpackung der zweiten Tablette die Vorrichtung selbst zu Anwendung kommt. Auch kann eine derartige Aufnahme im Bereich des Auffangbehälters zur sicheren Verwahrung der zur Anwendung kommenden Tablette im Verkaufsraum zum Einsatz kommen. So kann beispielsweise im Auslieferungszustand der Vorrichtung die mit dem Hängemittel verbindbare Tablette in besagter Aufnahme sicher verwahrt werden.

Bevorzugte Ausführungsformen von erfindungsgemäßen Tabletten und hierfür vorgesehenen Vorrichtungen und Systemen werden in der beiliegenden Zeichnung gezeigt. Darin zeigt
- Figur 1: eine perspektivische Ansicht einer Vorrichtung für eine erfindungsgemäße Tablette,
- Figur 2: die Vorrichtung aus Figur 1 in Befüllungsposition,
- Figur 3: eine geschnittene Seitenansicht durch die Schnittlinie A-A der Vorrichtung aus Figur 1 ohne eingelegte Tablette,
- Figur 4: eine teilgeschnittene perspektivische Ansicht durch die Schnittlinie B-B der Vorrichtung aus Figur 1 mit eingelegter Tablette,
- Figur 5: eine perspektivische Ansicht einer erfindungsgemäßen Tablette.

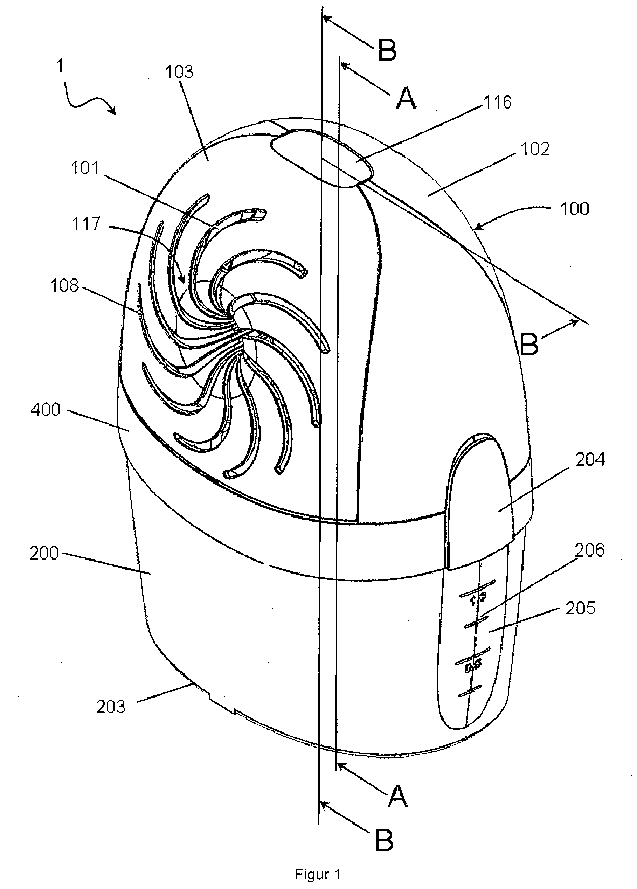

Figur 1 zeigt eine perspektivische Ansicht eines Luftentfeuchters 1 zur Absorption von Feuchtigkeit aus Raumluft. Dieser setzt sich aus mehreren aus einem Kunststoffmaterial gefertigten Bauelementen zusammen. Das Oberteil des Luftentfeuchters 1 wird durch eine Abdeckung 100 gebildet. Selbige setzt sich zusammen aus einem Abdeckbereich 102 und einem hinsichtlich des Abdeckbereichs 102 verschwenkbaren Deckel 103. Im abgebildeten verschlossenen Zustand des Luftentfeuchters 1 umschließt besagte aus Deckel 103 und Abdeckbereich 102 bestehende Abdeckung 100 einen Innenraum 101. Im Innenraum 101 ist eine von der Abdeckung 100 verdeckte Haltevorrichtung für eine erfindungsgemäße Tablette vorgesehen, beinhaltend ein hygroskopisches Luftentfeuchtungsmittel und aufweisend einen im wesentlichen zylindrischen Tablettenkörper, mit einer an zwei gegenüberliegenden Stirnseite sowie einer Mantelseite vorgesehenen Sorptionsoberfläche. Um eine Sorption der Feuchtigkeit zu ermöglichen, weist die Abdeckung 100 im Bereich des Deckels 103 eine Vielzahl von Belüftungsschlitzen 108 auf. Selbige sind auch auf der gegenüberliegenden Seite der Vorrichtung auf dem Abdeckbereich 102 vorgesehen, wobei die Belüftungsschlitze 108 dort eine Projektion der Belüftungsschlitze 108 des Deckels 103 sind, um eine besonders gute Belüftung im Sinne einer Durchzugsmöglichkeit durch den Innenraum 101 bereitzustellen. Die Belüftungsschlitze 108 sind jeweils propellerartig angeordnet und münden in einem Belüftungstrichter 117, wobei dessen Hals in Richtung Innenraum 101 hineinragt. Auf selbige Weise ist der Abdeckbereich 102 auf der gegenüberliegenden Seite gestaltet. Dabei ist die Abdeckung 100 derart gestaltet, dass die Stirnseiten der Tablette mittels besagter Haltevorrichtung in Richtung der Belüftungsschlitze 108 des Deckels 103 und des Abdeckbereichs 102 weisen. Die Belüftungsschlitze 108 erstrecken sich so weit von dem Belüftungstrichtern 117 nach außen weg, dass die lichte Weite der Belüftungsöffnung, also der Abstand zwischen zwei auf dem Abdeckbereich 102 oder dem Deckel 103 gegenüberliegenden Endpunkten der Belüftungsschlitze 108 zumindest so groß ist, bevorzugt jedoch größer ist, als der Durchmesser einer zum Einsatz kommenden Tablette. Aufgrund der propellerartigen Anordnung der Belüftungsschlitze 108 liegt die jeweils eine Stirnseite der Tablette also zumindest in der Projektion aller Belüftungsschlitze 108, vorzugsweise ist selbige jedoch größer als eine Stirnseite. Durch eine derartige Gestaltung kann eine verbesserte Belüftung der Tablette, insbesondere durch eine gleichmäßige und dauerhafte Durchströmung der Abdeckung 100 ermöglicht werden.

Das Unterteil des Luftentfeuchters 1 bildet ein Auffangbehälter 200 umschließend einen Hohlraum für eine Salzlösung, welche durch die Sorption von Feuchtigkeit aus Raumluft über die Tablette entsteht. Der Auffangbehälter 200 weist einen im Wesentlichen oval geformten Behälterboden 203 auf, der als Standfläche für ein Substrat einen bodenseitig umlaufenden Rand beinhaltet sowie insbesondere zur Erhöhung der Stabilität eine vom umlaufenden Rand ausgehende und in Richtung Hohlraum gerichtete Wölbung. In Richtung Oberteil erstreckt sich eine Behälterwand 203, welche zumindest auf einer Seite mit einem zumindest teilweise transparenten oder durchscheinenden Sichtfenster 205 mit einer Skala 206 ausgestattet ist, um dem Anwender eine Möglichkeit bereitzustellen, den Stand oder das Niveau der Salzlösung im Hohlraum des Auffangbehälters 200 einzusehen. Der Auffangbehälter 200 ist über ein Schnappelement 204 mit der Abdeckung 100 verbunden. Ferner ist zwischen Abdeckung 100 und Auffangbehälter 200 ein Auslaufschutz 400 vorgesehen, der einerseits ein Abfließen der Salzlösung von der im Innenraum 101 vorgesehenen Tablette in den Hohlraum des Auffangbehälters 200 ermöglicht. Auf der anderen Seite jedoch ein aus beispielsweise dem Umkippen des Luftentfeuchters 1 resultierendes Auslaufen der Salzlösung aus diesem Hohlraum verhindert.

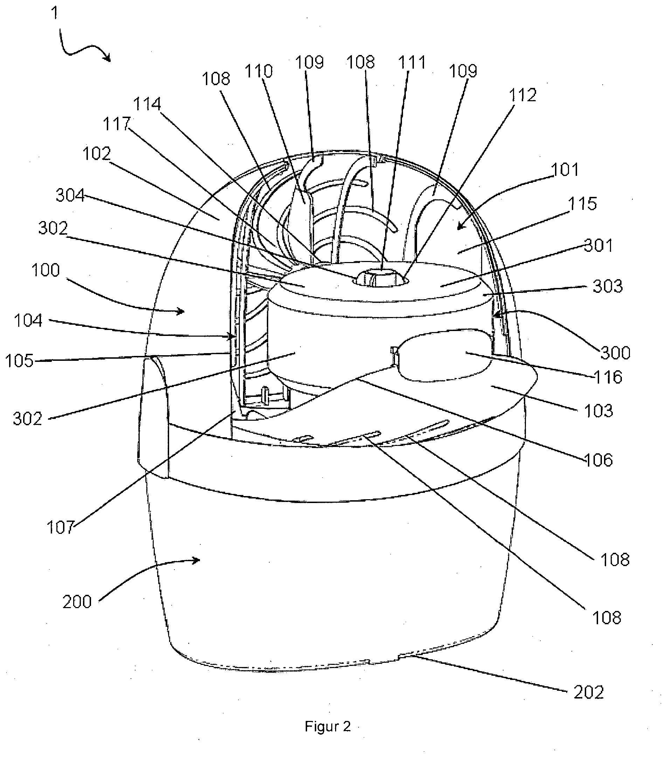

Figur 2 zeigt den Luftentfeuchter 1 aus Figur 1 in Befüllungsposition. Hierzu ist der mit dem Abdeckbereich 102 über Scharniere 107 verbundene Deckel 103 um letztere hinsichtlich des Abdeckbereichs 102 verschwenkt worden und gibt nun eine Öffnung 104 frei durch die beispielsweise ein Eingriff in den Innenraum 101 ermöglicht werden kann. Das Öffnen erfolgt mittels der an der Oberseite des Deckels 103 gelegenen Öffnungshilfe 116, welche eine Verschlussmöglichkeit über ein Schnappverbindungsmittel des Deckels 103 mit dem Abdeckbereich 102 bereitstellt. Besagte Öffnung 104 wird durch eine Öffnungskante 105 des Abdeckbereichs 102 begrenzt. Der Deckel 103 wiederum weist eine Deckelkante 106 auf. Im geschlossenen Zustand des Luftentfeuchters 1 liegen die Kanten 105, 106 aneinander an, so dass der Innenraum 101 durch die Abdeckung 100, abgesehen von den Belüftungsschlitzen 108, geschlossen ist.

Der Deckel 103 weist ferner ein Hängemittel in Form eines vorstehenden Dorns 111 mit einer im Wesentlichen hohlzylindrischen Grundform auf, welcher Teil der Haltevorrichtung ist und zum Halten oder zur Lagerung einer Tablette 300 dient. Besagte Tablette 300 weist einen im Wesentlichen zylindrisch gestalteten Tablettenkörper 301 auf und besteht zu einem Großteil aus gepresstem Calciumchlorid. Die Kanten der Tablette 300 weisen eine Fase 303 auf, insbesondere um ein Brechen der Kanten zur vermeiden und/oder um ein Einsetzen der Tablette 300 in den Luftentfeuchter 1 zu erleichtern. Die äußere Oberfläche der Tablette 300 fungiert als Sorptionsoberfläche 302 für die Sorption der Feuchtigkeit aus der Raumluft. Die Tablette 300 weist ferner eine als durchgehende und koaxial zur Zylinderachse verlaufende Durchgangsöffnung oder Bohrung gestaltete zentrische Aussparung 304 auf, welche einen größeren Durchmesser aufweist, als der Durchmesser des Dornes 111. Selbige dient durch die Bereitstellung einer Aufnahmemöglichkeit des Dornes 111 der Aufhängung der Tablette 300 im Innenraum 101 des Luftentfeuchters 1. Da der Dorn 111 mit dem Deckel 103 über einen Befestigungsabschnitt, im vorliegenden Fall durch Anformung an den Belüftungstrichter 117 verbunden ist, geht ein Verschwenken des Deckels 103 in die geschlossene Position einher mit einem Verschwenken des Dornes 111 und somit auch der Tablette 300. In der geschlossenen Position verläuft die Achse des Dorns 111 im Wesentlichen parallel zum Behälterboden 202 und/oder zum Substrat. In dieser Position hängt die Tablette an dem durch die Aussparung 304 verlaufenden Dorn 111, so dass das Hängemittel und insbesondere der Dorn 111 einen Kontakt nahezu der gesamten Sorptionsoberfläche 302 mit der Raumluft ermöglicht, um die freie und zur Sorption von Feuchtigkeit zur Verfügung stehende Sorptionsoberfläche 302 der Tablette 300 zu vergrößern.

In der gezeigten Befüllungsposition, bei der die Achse des Dornes 111 im Wesentlichen orthogonal zum Behälterboden 202 und/oder zum Substrat verläuft, ist eine Befüllung des Luftentfeuchters 1 mit einer Tablette 300 besonders einfach möglich. Der Anwender muss lediglich die Aussparung 304 in Höhe des vorstehenden Endes des Dornes 111 bringen und kann die Tablette 300 und Ausnutzung der Schwerkraft einfach in Richtung Deckel 103 gleiten oder fallen lassen.

Der Dorn 111 ist ferner mit sich axial erstreckenden und in radiale Richtung von der Außenseite des Dornes 111 hervorstehenden Abstandselementen in Form von vorstehenden Abstandsrippen 112 ausgestattet. Die Abstandsrippen 112 sind genau so groß, dass ein sicherer Halt der Tablette 300 über die Aussparung 304 ermöglicht werden kann und dass eine Beabstandung der inneren Oberfläche der Tablette 300 im Bereich der Aussparung 304 von der äußeren Manteloberfläche des Dornes 11 ermöglicht wird. So kann eine definierte und hinsichtlich der Kontaktfläche möglichst kleine Auflagemöglichkeit für die Tablette 300 im Bereich ihrer Aussparung 304 bereitgestellt werden, um die Kontaktfläche zwischen Tablette 300 und Dorn 111 zu minimieren.

Auf der dem Deckel 103 gegenüberliegenden Seite ist im Bereich des Belüftungstrichters 117 eine von einer Innenwand 115 des Abdeckbereichs 102 in den Innenraum 101 vorstehende Aufnahme 114 vorgesehen. Selbige ist derart gestaltet, dass eine Auflagemöglichkeit oder ein Gegenlager für den Dorn 111 in der geschlossenen Position bereitgestellt werden kann, um eine sichere Haltemöglichkeit für die Tablette 300 zu gewährleisten. Ferner ist die Innenwand 115 mit einer Vielzahl von in den Innenraum 101 ragenden Verstärkungsrippen 109 ausgestattet, so dass der Abdeckbereich 102 und auch der Deckel 103 lediglich eine geringe Wandstärke aufweisen können, der Luftentfeuchter 1 jedoch dennoch stabil ist. Zudem sind mehrere in den Innenraum 101 ragende Abstandselemente 110 vorgesehen, die mitunter auch an einige der Verstärkungsrippen 109 angeformt sind. Die Abstandselemente 110 sind als Rippen ausgestaltet, können jedoch auch andere sich eignende Formen aufweisen und dienen der definierten Beabstandung einer Tablette 300 von der Innenwand 115 im geschlossenen Zustand des Luftentfeuchters 1. Auf diese Weise kann verhindert werden, dass die Innenwand 115 Bereiche der Sorptionsoberfläche 302 der Tablette 300 abdeckt, so dass nicht ausreichend freie Sorptionsoberfläche 302 für die Sorption der Feuchtigkeit aus der Raumluft zur Verfügung steht. Denkbar ist zudem die Nutzung der von der Innenwand 115 in Richtung Innenraum 101 ragenden Abstandselemente 110 zur eindeutigen Positionierung, beispielsweise mittels Eingriff in die Fase 303 der Tablette oder zur drehsichern Fixierung einer Tablette 300 hinsichtlich des Dornes 111, insbesondere durch Verwendung einer Tablette 300 mit einer Nut oder einer Öffnung, in die beispielsweise eines der Abstandselemente 110 eingreift.

Ferner sind in Figur 2 die Belüftungsschlitze 108 in geschlossener Position an gegenüberliegenden Seiten, nämlich an dem Abdeckbereich 102 und gegenüberliegend an dem Deckel 103 zu erkennen, um eine Belüftung der Tablette 300 mit Raumluft zur Sorption der Feuchtigkeit aus der Raumluft zu ermöglichen. Der Dorn 111 ist als Haltevorrichtung dabei in geschlossener Position des Luftentfeuchters 1 zwischen beiden einander gegenüberliegenden und mit Belüftungsschlitzen 108 ausgestatteten Bereichen angeordnet, um eine Durchzugsmöglichkeit der Raumluft durch den Innenraum 101 der Abdeckung 100 bereitzustellen. Genauer gesagt ist der Dorn 11 genau in der Mündung des Belüftungstrichters 117 des Deckels 103 angeordnet, die Aufnahme 114 wiederum in der Mündung des Belüftungstrichters 117 des Abdeckbereichs 102. Dabei sind die beiden gegenüberliegenden und mit Belüftungsschlitzen 108 ausgestatteten Bereiche sowie die beiden Belüftungstrichter 117 derart gestaltet, dass der eine Bereich eine Projektion des anderen Bereichs ist.

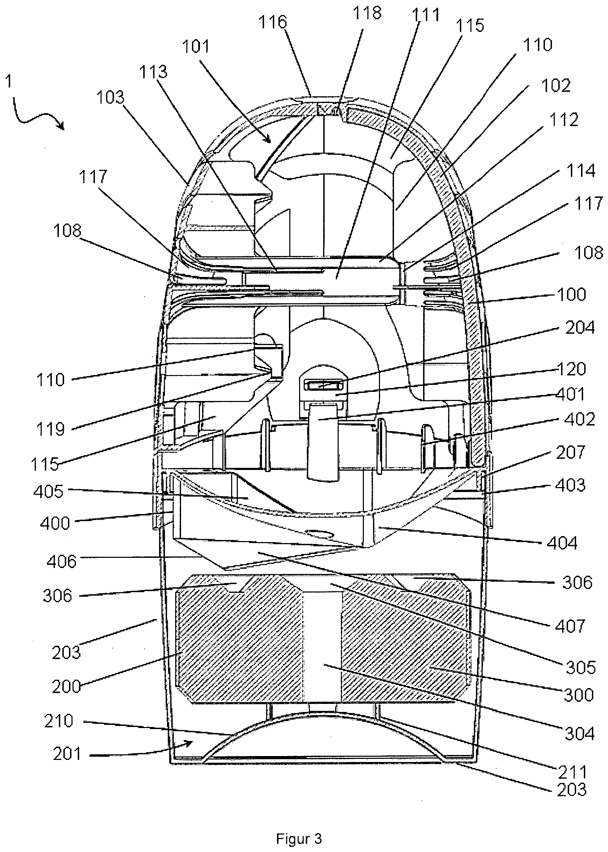

Figur 3 zeigt eine geschnittene Seitenansicht durch die Schnittlinie A-A des Luftentfeuchters 1 aus Figur 1 in geschlossener Position. Der besseren Übersicht halber weist der gezeigte Luftentfeuchter 1 im Bereich des Dornes 111 keine Tablette 300 auf. Jedoch ist im Auffangbehälter 200 oberhalb des Behälterbodens 202, der im Mittelbereich durch eine in den Hohlraum 201 ragende Wölbung 210 bereitgestellt wird, auf selbiger Wölbung 210 eine Tablettenaufnahme 211 vorgesehen. Hier kann eine Tablette 300 verwahrt werden, beispielsweise um dem Anwender eine Nachfüllmöglichkeit bereitzustellen. Ach kann die Tablettenaufnahme 211 zur Fixierung einer Tablette 300 im Auffangbehälter 200 als Transportsicherung dienen. Die Tablette 300 ist vorzugsweise in einer Umverpackung aus einem Folienmaterial verpackt und ist vor der Nutzung des Luftentfeuchters 1 aus dem Aufnahmebehälter 200 zu entnehmen. Die Tablette 300, die zur Nutzung - wie oberhalb beschrieben auf das als Dorn 111 gestaltete Hängemittel geschoben werden kann - weist hierfür die Aussparung 304 auf, welche zumindest auf einer Stirnseite der Tablette als Trichter 305 gestaltet ist. Zudem weist die Tablette 300 eine um die Aussparung herum verlaufende, jedoch radial beabstandete Nut auf. Diese besondere Form verleiht der Tablette 300 eine größere Sorptionsoberfläche, so dass die Sorptionsrate im Vergleich zu herkömmlichen, insbesondere mit flachen Stirnflächen ausgestatteten Tabletten 300 verbessert werden kann.

Zwischen der Abdeckung 100 und dem Auffangbehälter ist - wie oberhalb angesprochen - der Auslaufschutz 400 vorgesehen. Selbiger weist als Schnappelemente gestaltete Befestigungsabschnitte 401 auf und ist über selbige an einem Montageabschnitt 120 der Abdeckung 100 mit letztgenannter verbunden. Der Montageabschnitt 120 dient auch der Befestigung des Auffangbehälters 200 über dessen Schnappelement 204 an der Abdeckung 100. Zudem weist der Auslaufschutz 400 eine Vielzahl von in Richtung Innenraum 101 sowie mit der Innenwand 115 in Eingriff bringbare und vorstehende Führungsrippen 402 auf, die eine Montage des Auslaufschutzes 400 und der Abdeckung 100 erleichtern. Zur Befestigung des Auslaufschutzes 400 und dem Auffangbehälter 200 weist der Auslaufschutz 400 einen umlaufenden Kragen 403 auf, mit welchem der Auslaufschutz 400 auf eine obere Kante 207 der Behälterwand 203 aufgesetzt werden kann. Dabei sind beide Bereiche derart gestaltet, dass eine dichte Verbindung bereitgestellt werden kann. Denkbar ist hier auch der Einsatz einer optionalen Dichtung, um die Abdichtung weiter zu verbessern. Der Auslaufschutz 400 weist einen Trichter 404 auf, welche bereichsweise in den Hohlraum 201 ragt. Der Trichter 404 dient der Sammlung der Salzlösung, welche daraufhin durch eine obere Ablauföffnung 405 in einen Ablaufkanal 407 und schließlich durch eine untere Ablauföffnung 406 in den Hohlraum 201 des Auffangbehälters 200 fließt. Dabei sind der Trichter 404 sowie der Ablaufkanal 407 derart konstruiert, ragen insbesondere derart in den Hohlraum hinein und sind derart von der Behälterwand 203 beabstandet, dass ein Zurücklaufen der Salzlösung selbst bei einem Umkippen des Luftentfeuchters 1 durch die untere Auslauföffnung 406 erschwert oder nahezu unmöglich wird.

Im oberen Teil des Luftentfeuchters 1 sind die gegenüberliegenden Belüftungstrichter 117 des Abdeckbereichs 102 und des Deckels 103 zu erkennen, wobei sich die Belüftungsschlitze 108 jeweils bereichsweise in den Belüftungstrichter 117 erstrecken, um die Belüftung des Innenraumes 101 und somit der dort anzuordnenden Tablette 300 zu verbessern. Der sich von dem Belüftungstrichter 117 des Deckels 103 in Richtung der Aufnahme 114 am Belüftungstrichter 117 des Abdeckbereichs 102 erstreckende hohlzylindrische Dorn 111 weist zudem in selbige Erstreckungsrichtung verlaufende Belüftungsschlitze 113 auf, um die Oberfläche einer eingehängten Tablette 300 im Bereich ihrer Aussparung 304 zu belüften und um somit die freie Sorptionsoberfläche der Tablette 300 zu vergrößern. Die radial von der äußeren Oberfläche des Dornes 111 vorstehende und in besagte Erstreckungsrichtung verlaufende Abstandsrippen 112 dienen der Minimierung der Kontaktfläche zwischen Tablette 300 und Dorn 111. Der hohlzylindrische Dorn 111 mündet in der in Figur 2 abgebildeten und in Figur 3 durch die Tablette 300 verdeckten Aufnahme 114, welche ebenfalls hohl gestaltet ist und wiederum in den Belüftungstrichter 117 des Abdeckbereichs 102 führt. Somit kann eine Durchzugsmöglichkeit für die Raumluft durch den Luftentfeuchters 1 ermöglicht werden, beispielsweise in den Belüftungstrichter 117 des Deckels 103, den hohlzylindrischen Dorn 111, die Aufnahme 114 bis hin zum Belüftungstrichter 117 des Abdeckbereichs 102 und in entgegengesetzte Richtung. Hierdurch wird eine besondere gute Belüftung der Oberfläche einer eingehängten Tablette 300 im Bereich ihrer Aussparung 304 gewährleistet. Es kann somit eine Durchzugsmöglichkeit durch die Aussparung 304 der Tablette 300 ermöglicht werden.

Der Deckel 103 sowie der Abdeckbereich 102 weisen zudem die in Richtung Innenraum 101 ragenden Abstandselemente 110 in Form von vorstehenden, an die jeweiligen Bauteile angeformten Rippen auf, die einen Abstand zwischen Tablette 300 und Innenwand 115 definieren, um die Kontaktfläche von Tablette 300 und Abdeckung 100 möglichst gering zu halten und um die freie Sorptionsoberfläche zu maximieren. Zudem sind an einigen der Abstandselemente 110 des Deckels 103 in den Innenraum 101 ragende Nocken 119 vorgesehen. Selbige sind auf einem Kreis radial um den Dorn 111 herum angeordnet und greifen bei eingelegter Tablette 300 in die oberhalb beschriebene umlaufende Nut 306 der Tablette 300 ein. Insbesondere kann durch diese Nocken 119 ermöglicht werden, dass Tabletten 300 unterschiedlicher Stärke aufgenommen und genutzt werden können. Zum einen kann eine abgebildete Tablette 300 mit einer Nut 306 verwendet werden. Zum anderen kann jedoch auch eine kleinere Tablette 300 zum Einsatz kommen, die lediglich eine Stärke derart aufweist, die im Wesentlichen dem Abstand zwischen dem in den Innenraum 101 ragenden Ende einer Nocke 119 und dem gegenüberliegenden Ende eines Abstandselementes 110 des Abdeckbereiches 102 entspricht. Auch kann durch selbige Nocken 119 eine Möglichkeit einer eindeutigen Positionierung einer Tablette 300 und insbesondere einer drehsicheren Fixierung einer Tablette 300 hinsichtlich des Dornes 111 ermöglicht werden. Hierzu eignet sich beispielsweise der Einsatz einer gezeigten Tablette 300, die jedoch beispielsweise anstelle der Nut 306 im selben Bereich Sacklöcher zur Aufnahme der Nocken 119 aufweist.

Auch ist in Figur 3 besonders deutlich der Öffnungsmechanismus des Deckels 103 zu erkennen. An der Oberseite des Luftentfeuchters 1 weist der Deckel 103 wir oberhalb beschrieben eine Öffnungshilfe 116 aufweisend einen Haken auf, wobei korrespondierende Verbindungsmittel 118 aufweisend insbesondere eine Hakenaufnahme an dem Abdeckbereich 102 vorgesehen sind. Durch leichten Druck von oben auf die Öffnungshilfe 116 kann beschriebener Haken aus der Hakenaufnahme des Verbindungsmittels 118 ausgehängt werden, um den Deckel 103 für einen Wechsel in eine Befüllungsposition des Luftentfeuchters 1 hinsichtlich des Abdeckbereichs 102 zu verschwenken.

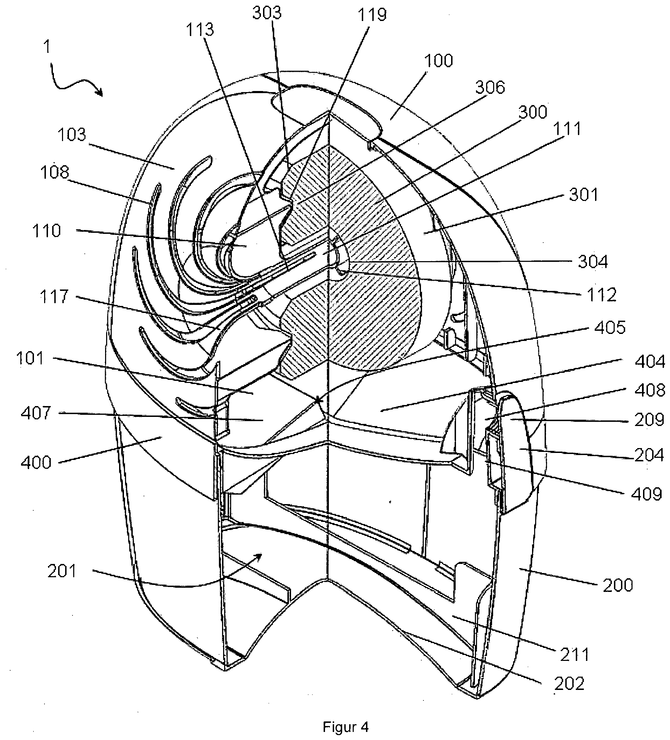

Figur 4 zeigt eine teilgeschnittene perspektivische Ansicht durch die Schnittlinie B-B der Vorrichtung aus Figur 1 mit eingelegter Tablette. Figur 4 zeigt somit ein System bestehend aus Luftentfeuchter 1 und Tablette 300. Der Dorn 111 erstreckt sich durch die Aussparung 304 der Tablette 300. Der hohlzylindrische Dorn 111 weist jedoch einen kleineren Durchmesser auf als die Aussparung 304. Der Kontakt zwischen der Tablette 300 und dem Dorn 111 wird über die radial vorstehenden Abstandsrippen 112 bereitgestellt, so dass in den Zwischenräumen zwischen zwei Abstandsrippen 112 zwischen der Mantelfläche des Dornes 111 und der Oberfläche der Aussparung 304 ein Abstand vorgesehen ist, um dort eine Belüftungsmöglichkeit der Tablette 300 über die Belüftungsschlitze 113 des Dornes 111 zu ermöglichen. Die Belüftungsschlitze 113 erstrecken sich dabei von dem Dorn 111 über den Belüftungstrichter 117 bis in die Frontseite des Deckels 103 und münden in einigen der Belüftungsschlitze 108. Bevorzugt sind die Belüftungsschlitze 113 nur an den Seiten sowie an der Unterseite des Dornes 111 vorgesehen, nicht jedoch an der Oberseite, um ein herauslaufen der Salzlösung aus dem Belüftungstrichter 117 in jedem Fall zu vermeiden.

Zur Fixierung der Tablette 300 innerhalb des Innenraums 101 sind die an den Deckel 103 und an selbigen angeformte und in den Innenraum 101 in Richtung Tablette 300 ragende Abstandselemente 110 vorgesehen, welche im Bereich der Nut 306 der Tablette 300 die vorstehenden Nocken 119 aufweisen. Die von der Tablette 300 absorbierte Feuchtigkeit tropft als Salzlösung in Richtung des unter der Abdeckung 100 angeordneten Auffangbehälters 200 und somit in den Trichter 404 des Auslaufschutzes 400. Durch die obere Auslauföffnung 405 gelangt die Salzlösung schließlich über den Auslaufkanal 407 in den Hohlraum 201 des Auffangbehälters 200. Figur 4 zeigt auch noch einmal die an den Behälterboden 202 angeformte und in den Hohlraum 201 ragende Tablettenaufnahme 211.

Zum Entleeren des Hohlraumes 201 des Auffangbehälters 201 ist der Luftentfeuchter 1 zudem mit einem Ausguss ausgestattet. Selbiger ist seitlich an dem Luftentfeuchter 1 vorgesehen und zwar auf der Höhe des Auslaufschutzes 400. Der Auslaufschutz 400 weist hierfür einen Ausgusskanal 409 auf, der in Richtung des Hohlraumes 201 offen ist und welcher an seinem anderen Ende durch eine Öffnung der Abdeckung 100 ragt und dort in einer Ausgussöffnung 408 an der Seite des Luftentfeuchters 1 mündet. Verschlossen wird die Ausgussöffnung 408 von einem öffenbaren Verschlusselement 209, welches an dem Schnappelement 204 zur Befestigung des Auffangbehälters 200 an der Abdeckung 100 vorgesehen ist.

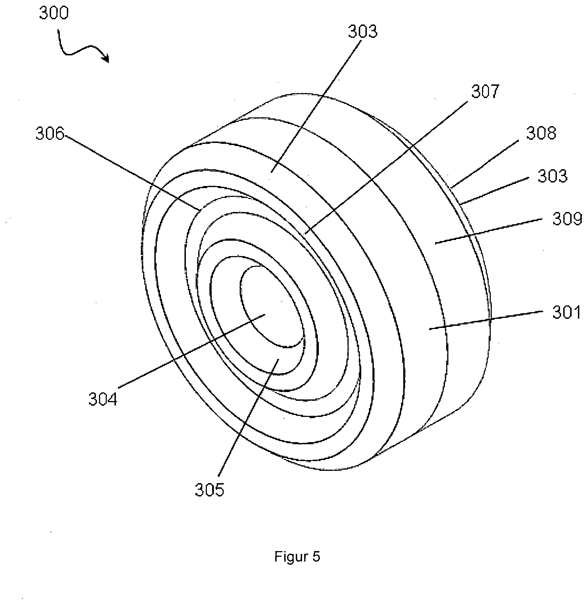

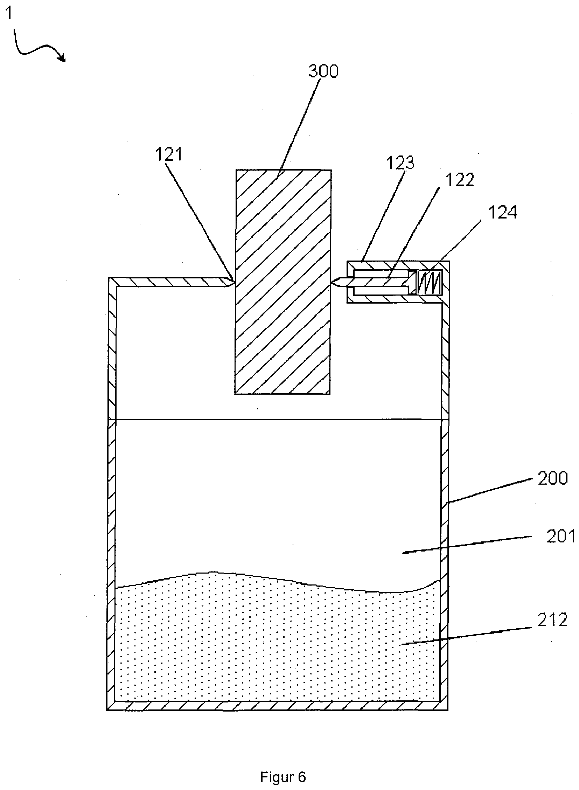

Figur 5 zeigte eine perspektivische Ansicht einer erfindungsgemäßen Tablette 300 beinhaltend ein hygroskopisches Luftentfeuchtungsmittel zur Absorption von Feuchtigkeit aus Raumluft und aufweisend einen im Wesentlichen zylindrischen Tablettenkörper 301 mit einer Oberseite, umfassend die Deckfläche 307, einer Unterseite, umfassend eine Bodenfläche 308, sowie einer Mantelfläche 309. Die äußere Oberfläche der Tablette 300 ist die Sorptionsoberfläche 302 zur Sorption der Feuchtigkeit. Der Tablettenkörper 301 weist eine Aussparung 304 zur Aufnahme eines dornförmig gestalteten Hängemittels zum Aufhängen der Tablette 300 auf. Im gezeigten Ausführungsbeispiel ist die Aussparung 304 als durchgehende zylindrische Durchgangsöffnung oder Bohrung gestaltet, die von einer Deckfläche 307 durch den Tablettenkörper 301 bis zur Bodenfläche 308 reicht. Eine derartige Tablette 300 kann beispielsweise in einem in den Figuren 1 bis 4 gezeigten Luftentfeuchter 1 zum Einsatz kommen. Auch Durchgangsöffnungen anderer Art, insbesondere mit einem anderen Querschnitt sind denkbar. Die Aussparung 304 ist in Richtung Deckfläche 307 in Form einer trichterförmigen Mulde 305 geweitet. Auf gleiche Weise kann die Aussparung auf der gegenüberliegenden Seite gestaltet sein. Zumindest die Oberseite der Tablette 300 ist zudem mit Bereichen unterschiedlichen Niveaus ausgestattet, um zur Erhöhung der Sorptionsrate von Feuchtigkeit aus Raumluft die zur Verfügung stehende Sorptionsoberfläche 302 zu vergrößern. Im vorliegenden Ausführungsbeispiel ist hierfür eine um die Aussparung 304 radial versetzt herumlaufende und im Querschnitt trichterförmige Nut 306 in der Deckfläche 307 vorgesehen. Selbige kann in einer Variante zusätzlich oder alternativ auch ausschließlich auf der Unterseite in der Bodenfläche 308 vorgesehen werden. Auch kann die Mantelfläche 309 eine derartige Gestaltung aufweisen. Selbstverständlich sind hier auch variierende Formen der Nut 306 oder der Einsatz ähnlicher Mittel denkbar, insbesondere eine Vielzahl von Sacklöchern, eine Wellenform oder andere Ausführungen, die eine Vergrößerung der Sorptionsoberfläche 302 ermöglichen. Durch besagte Nut 306 und die trichterförmige Mulde 305 weist besagte Tablette 300 in der Schnittansicht insbesondere an der Oberseite und/oder an der Unterseite eine wellenartige Gestaltung auf. Auch weist die Tablette 300 an den Kanten der Deckfläche 307 und der Bodenfläche 308 jeweils eine umlaufende Fase 303 auf, um die Handhabung der Tablette 300 zu vereinfachen. Natürlich ist es denkbar eine Tablette 300 einzusetzen, welche keine zylindrische Grundform aufweist. Die Tablette 300 kann auch anstelle eines runden Querschnittes einen ovalen, einen dreieckigen, einen vieleckigen oder einen beliebig gestalteten Querschnitt aufweisen, der sich zum Einsatz in einem Luftentfeuchter eignet.

Durch die Ausstattung der im Wesentlichen zylindrischen Tablette 300 mit einer Nut 306 in der Deckfläche 307, besagten Fasen 303 an Deckfläche 307 und Bodenfläche 308, der Aussparung 304 mit einer Mulde 305 im Bereich der Deckfläche 307 kann eine einfachere Handhabung ermöglicht und die Sorptionsoberfläche der Tablette 300 im Vergleich zur bekannten Tabletten mit reinen Zylinderformen um über 10% gesteigert werden, so dass eine verbesserte Sorptionsrate durch den Einsatz einer erfindungsgemäßen Tablette 300 ermöglicht werden kann. Die Oberfläche einer erfindungsgemäßen Tablette 300, wie sie im bevorzugten Ausführungsbeispiel gezeigt ist, die als Sorptionsoberfläche zur Verfügung steht, liegt inklusive der Oberfläche der Tablette 300 im Bereich der Aussparung 304 vorzugsweise im Bereich von 290² bis 340cm².

**Bezugszeichenliste:**

| | | | |
|---|---|---|---|
| 1 | Luftentfeuchter | 203 | Behälterwand |
| 100 | Abdeckung | 204 | Schnappelement |
| 101 | Innenraum | 205 | Sichtfenster |
| 102 | Abdeckbereich | 206 | Skala |
| 103 | Deckel | 207 | Kante |
| 104 | Öffnung | 209 | Verschlusselement |
| 105 | Öffnungskante | 210 | Wölbung |
| 106 | Deckelkante | 211 | Tablettenaufnahme |
| 107 | Scharnier | 212 | Salzlösung |
| 108 | Belüftungsschlitz | 300 | Tablette |
| 109 | Verstärkungsrippe | 301 | Tablettenkörper |
| 110 | Abstandselement | 302 | Sorptionsoberfläche |
| 111 | Dorn | 303 | Fase |
| 112 | Abstandsrippe | 304 | Aussparung |
| 113 | Belüftungsschlitz | 305 | Mulde |
| 114 | Aufnahme | 306 | Nut |
| 115 | Innenwand | 307 | Deckfläche |
| 116 | Öffnungshilfe | 308 | Bodenfläche |
| 117 | Belüftungstrichter | 309 | Mantelfläche |
| 118 | Verbindungsmittel | 400 | Auslaufschutz |
| 119 | Nocken | 401 | Befestigungsabschnitt |
| 120 | Montageabschnitt | 402 | Führungsrippe |
| 121 | Lagerspitze | 403 | Kragen |
| 122 | Versatzspitze | 404 | Trichter |
| 123 | Führungselement | 405 | Obere Ablauföffnung |
| 124 | Feder | 406 | Untere Ablauföffnung |
| 200 | Auffangbehälter | 407 | Ablaufkanal |
| 201 | Hohlraum | 408 | Ausgussöffnung |
| 202 | Behälterboden | 409 | Ausgusskanal |

## Patentansprüche

1. Tablette bestehend aus einem hygroskopischen Luftentfeuchtungsmittel in Pulver- oder Granulatform, wie beispielsweise Calciumchlorid oder Magnesiumchlorid oder einer Mischung, das durch ein Pressverfahren in besagte Tablettenform gebracht worden ist, zur Absorption von Feuchtigkeit aus Raumluft, aufweisend einen Tablettenkörper (301) mit einer im Wesentlichen zylindrischen Grundform mit einer Oberseite umfassend eine Deckfläche (307), einer Unterseite umfassend eine Bodenfläche (308) sowie einer Mantelfläche (309), wobei die äußere Oberfläche der Tablette die Sorptionsoberfläche (302) zur Absorption der Feuchtigkeit ist, wobei der Tablettenkörper (301) eine Aussparung (304) geeignet zur Aufnahme eines dornförmig gestalteten Hängemittels (111, 121, 122) eines Luftentfeuchters (1) zum Aufhängen der Tablette (300) aufweist, die als durchgehende zylindrische Durchgangsöffnung oder Bohrung gestaltet ist, die von der Deckfläche (307) durch den Tablettenkörper (301) bis zur Bodenfläche (308) reicht, und wobei die Sorptionsoberfläche (302) des Tablettenkörpers (301) an der Oberseite (307) und/oder der Unterseite (308) mit Bereichen unterschiedlichen Niveaus ausgestaltet ist, um zur Erhöhung der Sorptionsrate von Feuchtigkeit aus Raumluft die zur Verfügung stehende Sorptionsoberfläche (302) zu vergrößern.

2. Tablette nach Anspruch 1, **dadurch gekennzeichnet, dass** die mit Bereichen unterschiedlichen Niveaus ausgestattete Oberseite (307) und/oder Unterseite (308) zur Vergrößerung der zur Verfügung stehenden Sorptionsoberfläche (302) eine um die Aussparung (304) radial versetzt herumlaufende und im Querschnitt trichterförmige Nut (306) aufweist.

3. Tablette nach Anspruch 1 oder 2, **dadurch gekennzeichnet, dass** die mit Bereichen unterschiedlichen Niveaus ausgestattete Oberseite (307) und/oder Unterseite (308) zur Vergrößerung der zur Verfügung stehenden Sorptionsoberfläche (302) eine Vielzahl von Sacklöchern aufweist.

4. Tablette nach einem der vorhergehenden Ansprüche, **dadurch gekennzeichnet, dass** an den Kanten der Oberseite (307) und der Unterseite (308) jeweils eine umlaufende Fase (303) vorgesehen ist, um die Handhabung der Tablette (300) zu vereinfachen.

5. Tablette nach einem der vorhergehenden Ansprüche, **dadurch gekennzeichnet, dass** sie eine zylindrische Grundform mit einem runden Querschnitt oder eine Grundform mit einem ovalen oder einem dreieckigen oder einem vieleckigen Querschnitt aufweisen.

6. Tablette nach Anspruch 1 oder 2, **dadurch gekennzeichnet, dass** die mit Bereichen unterschiedlichen Niveaus ausgestattete Oberseite (307) und/oder Unterseite (308) zur Vergrößerung der zur Verfügung stehenden Sorptionsoberfläche (302) wellenartig gestaltet ist.

7. Tablette nach einem der vorhergehenden Ansprüche, **dadurch gekennzeichnet, dass** die Sorptionsoberfläche (302) eine Größe im Bereich von 290 cm² bis 340 cm² aufweist.

8. Tablette nach einem der vorhergehenden Ansprüche, **dadurch gekennzeichnet, dass** die Aussparung (304) in Richtung Oberseite (307) und/oder Unterseite (308) in Form einer trichterförmigen Mulde (305) geweitet ist.

## Claims

1. A tablet consisting of a hygroscopic air dehumidifying agent in powder or granulate form, such as calcium chloride or magnesium chloride or a mixture, which tablet is brought into said tablet form by a pressing process, for absorbing moisture from ambient air, comprising a tablet body (301) that has a substantially cylindrical basic shape having a top face comprising a top surface (307), a bottom face comprising a bottom surface (308) and a lateral surface (309), wherein the external surface of the tablet is the sorption surface (302) for absorbing the moisture, wherein the tablet body (301) has a recess (304) suitable for receiving a spike-shaped suspension means (111, 121, 122) of an air dehumidifier (1) for suspending the tablet (300), which recess is formed as a continuous, cylindrical passage opening or bore that extends from the top surface (307) through the tablet body (301) as far as the bottom surface (308), and wherein the sorption surface (302) of the tablet body (301) is designed to have regions of varying levels on the top face (307) and/or the bottom face (308) so as to increase the available area of the sorption surface (302) in order to improve the sorption rate of moisture from the ambient air.

2. The tablet according to claim 1, **characterized in that** the top face (307) and/or bottom face (308) provided with regions of varying levels for increasing the available area of the sorption surface (302) has/have a groove (306) that is funnel-shaped in cross section and runs around the recess (304) in a radially offset manner.

3. The tablet according to claim 1 or 2, **characterized in that** the top face (307) and/or bottom face (308) provided with regions of varying levels for increasing the available area of the sorption surface (302) has/have a plurality of blind holes.

4. The tablet according to one of the preceding claims, **characterized in that** a chamfer (303) runs around the edge of the top face (307) and the edge of the bottom face (308) in order to facilitate handling of the tablet (300).

5. The tablet according to one of the preceding claims, **characterized in that** it has a cylindrical basic shape having a round cross section or a basic shape that has an oval, triangular or polygonal cross section.

6. The tablet according to claim 1 or 2, **characterized in that** the top face (307) and/or bottom face (308) provided with regions of varying levels for increasing the available area of the sorption surface (302) is/are wave-like.

7. The tablet according to one of the preceding claims, **characterized in that** the sorption surface (302) has an area in the range of from 290 cm² to 340 cm².

8. The tablet according to one of the preceding claims, **characterized in that** the recess (304) widens in the form of a funnel-shaped well (305) towards the top face (307) and/or bottom face (308).

## Revendications

1. Pastille constituée d'un moyen hygroscopique de déshumidification de l'air sous forme de poudre ou de granulés, par exemple de chlorure de calcium ou de chlorure de magnésium ou d'un mélange qui a été mis sous ladite forme de pastille par un procédé de compression, pour l'absorption de l'humidité de l'air ambiant, comportant un corps de pastille (301) ayant une forme de base sensiblement cylindrique présentant une partie supérieure comprenant une face supérieure (307), une partie inférieure comprenant une face inférieure (308) ainsi qu'une partie latérale (309), la surface supérieure externe de la pastille étant la surface de sorption (302) pour l'absorption de l'humidité, le corps de pastille (301) comportant un évidement (304) adapté pour loger un dispositif de retenue (111, 121, 122), conçu sous forme de pointe, d'un déshumidificateur d'air (1), destiné à suspendre la pastille (300), lequel évidement est conçu sous forme d'ouverture cylindrique traversante ou de trou allant de la face supérieure (307) à la face inférieure (308) en traversant le corps de pastille (301), et la surface de sorption (302) du corps de pastille (301) étant doté de zones avec des niveaux différents sur la face supérieure (307) et/ou la face inférieure (308) pour augmenter la surface de sorption (302) disponible en vue de l'amélioration du taux de sorption de l'humidité de l'air ambiant.

2. Pastille selon la revendication 1, **caractérisée en ce que** la face supérieure (307) et/ou la face inférieure (308) dotées de zones avec des niveaux différents comporte, pour augmenter la surface de sorption (302) disponible, une rainure circonférentielle, en forme d'entonnoir (306) en coupe transversale, et décalée radialement par rapport à l'évidement (304).

3. Pastille selon la revendication 1 ou 2, **caractérisée en ce que** la face supérieure (307) et/ou la face inférieure (308) dotées de zones avec des niveaux différents comportent une pluralité de trous borgnes pour augmenter la surface de sorption (302) disponible.

4. Pastille selon l'une des revendications précédentes, **caractérisée en ce qu'**un chanfrein (303) est prévu, respectivement, sur les bords de la face supérieure (307) et de la face inférieure (308), pour faciliter la manipulation de la pastille (300).

5. Pastille selon l'une des revendications précédentes, **caractérisée en ce qu'**elle a une forme de base cylindrique avec une section transversale circulaire ou une forme de base avec une section transversale ovale, triangulaire ou polygonale.

6. Pastille selon la revendication 1 ou 2, **caractérisée en ce que** la face supérieure (307) et/ou la face inférieure (308) dotées de zones avec des niveaux différents sont conçues sous forme de plis, pour augmenter la surface de sorption (302) disponible.

7. Pastille selon l'une des revendications précédentes, **caractérisée en ce que** la surface de sorption (302) a une dimension allant de 290 cm² à 340 cm².

8. Pastille selon l'une des revendications précédentes, **caractérisée en ce que** l'évidement (304) est élargi en direction de la face supérieure (307) et/ou de la face inférieure (308) de manière à former une cavité en forme d'entonnoir (305).
